# EUROPEAN PATENT APPLICATION

(11) **EP 4 219 060 A1**
(43) Date of publication of application: **02.08.2023**
(21) Application number: 22871469.7
(22) Date of filing: 09.06.2022
(51) Int. Cl.: B23K 26/00, B23K 26/14, B23K 26/70, B23K 26/21, B23K 26/16, B23K 37/04, B23K 37/00

(54) **LASER WELDING COPPER NOZZLE, LASER WELDING AUXILIARY DEVICE, AND LASER WELDING APPARATUS**

(30) Priority: 26.09.2021 CN 202122327330 U
(71) Applicant: Contemporary Amperex Technology Co., Limited, Ningde, Fujian 352100 (CN)
(72) Inventor: ZHANG, Zhihong, Ningde, Fujian 352100 (CN); QI, Congcheng, Ningde, Fujian 352100 (CN); LI, Zhengjuan, Ningde, Fujian 352100 (CN); ZHENG, Shixiong, Ningde, Fujian 352100 (CN)
(74) Representative: Rowlands, Stuart Michael
(86) International application number: PCT/CN2022/097815
(87) International publication number: WO 2023/045408

(57) **Abstract**

A laser welding copper nozzle, a laser welding auxiliary device, and a laser welding apparatus. The laser welding copper nozzle has: air inlets (1) used for communication with air inlet channels (2), so that during laser welding, an air blowing apparatus blows air to the air inlets (1) through the air inlet channels (2); air outlets (3) used for communication with air extraction channels (4), so that during the laser welding, a suctioning apparatus extracts air from the air outlets (3) through the air extraction channels (4), the axis of each air inlet (1) and the axis of the corresponding air outlet (3) being on a same straight line, and a laser channel for allowing laser light to pass through during the laser welding being formed between the air inlet (1) and the air outlet (3). The axis of the air inlet (1) and the axis of the air outlet (3) are on the same straight line, so that shielding gas can be independently controlled when flowing from the air inlet (1) to the air outlet (3), such that the shielding gas forms a stable stratosphere in a welding region, so as to improve a welding protection effect, and avoid complex eddy flow or turbulent flow of the shielding gas, thus avoiding occurrence of false welding.

## Description

### Cross-Reference to Related Application

The present application claims priority to Chinese Patent Application No. 202122327330.X, entitled "LASER WELDING COPPER NOZZLE, LASER WELDING AUXILIARY APPARATUS AND LASER WELDING DEVICE", filed on September 26, 2021, which is incorporated herein by reference in its entirety.

### Technical Field

The present application relates to the technical field of welding, and in particular to a laser welding copper nozzle, a laser welding auxiliary apparatus and a laser welding device.

### Background Art

At present, laser welding technology is more and more widely used in various fields. The existing laser welding technology produces a lot of dust during welding, which will affect the welding effect.

In the prior art, when using the laser welding technology to weld a member to be welded, dust will appear in a weld seam of the member to be welded and a laser beam channel, which will be likely to cause a turbulent flow of plasmas and fumes between laser channels, resulting in laser energy attenuation, and eventually leading to the occurrence of false welding.

### Summary of The Invention

In view of the above problems, the present application provides a laser welding copper nozzle, a laser welding auxiliary apparatus and a laser welding device. The laser welding copper nozzle can allow a shielding gas to form a stable laminar layer in a welding area during dedusting, to improve the welding protection effect and avoid complex eddy or turbulence in the shielding gas, so that the occurrence of false welding can be avoided.

In a first aspect, the present application provides a laser welding copper nozzle including: a gas intake port configured to be in communication with a gas intake channel, so as to enable a blowing device to blow a gas to the gas intake port through the gas intake channel during laser welding; and a gas exhaust port configured to be in communication with a gas extraction channel, so as to enable a gas suction device to extract the gas from the gas exhaust port through the gas extraction channel during the laser welding. An axis of the gas intake port and an axis of the gas exhaust port are in the same straight line, and a laser channel for allowing laser to pass during the laser welding is formed between the gas intake port and the gas exhaust port.

In the technical solution of the embodiment of the present application, the gas intake port and the gas exhaust port are in the same straight line, and a laser channel for allowing laser to pass during the laser welding is formed between the gas intake port and the gas exhaust port, so that when performing laser welding, the shielding gas can be independently controlled when it flows from the gas intake port to the gas exhaust port, the shielding gas forms a stable laminar layer in the welding area to improve the welding protection effect and avoid complex eddy or turbulence in the shielding gas, and the occurrence of false welding can thus be avoided.

In some embodiments, at least two gas intake ports and at least two gas exhaust ports are provided, and each of the gas intake ports corresponds to one of the gas exhaust ports; each of the gas intake ports is configured to be connected to a different gas intake channel; and each gas exhaust port corresponding to one of the gas intake ports is configured to be connected to a different gas extraction channel. With the provision of at least two gas intake ports and at least two gas exhaust ports, it is possible to achieve multi-level cleaning of the laser channel through which the laser passes during the laser welding, and more effectively filter light-blocking particles such as fumes and plasmas in a gas flow in the laser channel, thereby reducing the energy attenuation of a welding laser beam, and further avoiding the occurrence of false welding.

In some embodiments, two gas intake ports and two gas exhaust ports are provided. With the provision of two gas intake ports and two gas exhaust ports, it is possible to achieve two-level cleaning of the laser channel through which the laser passes during the laser welding, and more effectively filter light-blocking particles such as fumes and plasmas in a gas flow in the laser channel, thereby reducing the energy attenuation of a welding laser beam, and further avoiding the occurrence of false welding.

In some embodiments, the gas intake port has a cross-sectional size smaller than or equal to that of the gas exhaust port. Thanks to the fact that the gas intake port has a cross-sectional size smaller than or equal to that of the gas exhaust port, the shielding gas that enters through the gas intake channel can be extracted through the gas extraction channel as much as possible, so as to avoid the occurrence of gas turbulence in the laser channel due to excess gas not being extracted, thereby further avoiding the occurrence of false welding caused by the gas turbulence in the laser channel.

In some embodiments, the laser welding copper nozzle has a hollow cavity, and a hollow part of the cavity forms the laser channel for allowing the laser to pass during the laser welding. The laser welding copper nozzle may be formed in one piece, and the laser channel is formed by the hollow part of the cavity of the laser welding copper nozzle, so that the cost of the laser welding copper nozzle can be reduced, and the laser welding copper nozzle is easy to install during the laser welding.

In some embodiments, the gas intake port and the gas exhaust port are both arranged at an inner side wall of the cavity. By arranging both the gas intake port and the gas exhaust port at the inner side wall of the cavity, the structure of the laser welding copper nozzle can be made simpler, and design and processing costs can be reduced.

In some embodiments, a surface of the laser welding copper nozzle is provided with: a gas inlet configured to be in communication with the gas intake port through the gas intake channel; and a gas dedusting port configured to be in communication with the gas exhaust port through the gas extraction channel. Under the action of external force (such as the blowing device), the gas flow can be directly guided from the gas inlet to the gas intake port through the gas intake channel, and then to the gas exhaust port through the laser channel. Moreover, under the action of external force (such as the gas suction device), the gas flow can be directly guided from the gas exhaust port to the gas dedusting port through the gas extraction channel.

In a second aspect, the present application also provides a laser welding auxiliary apparatus, including: the laser welding copper nozzle of any of the above embodiments; a blowing device configured to blow a gas to the gas intake port through the gas intake channel; and a gas suction device configured to extract the gas from the gas exhaust port through the gas extraction channel.

In the technical solution of the embodiment of the present application, since the laser welding auxiliary apparatus of this embodiment includes the laser welding copper nozzle of any of the above embodiments, it is possible to arrange the gas intake port of the laser welding copper nozzle and the gas exhaust port of the laser welding copper nozzle in the same straight line, and to form a laser channel for allowing laser to pass during the laser welding between the gas intake port and the gas exhaust port, so that when performing laser welding, the shielding gas can be independently controlled when it flows from the gas intake port to the gas exhaust port, the shielding gas forms a stable laminar layer in the welding area to improve the welding protection effect and avoid complex eddy or turbulence in the shielding gas, and the occurrence of false welding can thus be avoided.

In some embodiments, a surface of the laser welding copper nozzle is provided with: a gas inlet configured to be in communication with the gas intake port through the gas intake channel; a gas dedusting port configured to be in communication with the gas exhaust port through the gas extraction channel; the blowing device specifically configured to blow the gas to the gas intake port through the gas inlet and the gas intake channel; and the gas suction device specifically configured to extract the gas from the gas exhaust port through the gas extraction channel and the gas dedusting port. Under the action of the blowing device, the gas flow can be directly guided from the gas inlet to the gas intake port through the gas intake channel, and then to the gas exhaust port through the laser channel. Moreover, under the action of the gas suction device, the gas flow can be directly guided from the gas exhaust port to the gas dedusting port through the gas extraction channel.

In some embodiments, the blowing device is located on one side of a welding auxiliary station, and the gas suction device is located on the other side of the welding auxiliary station. By locating the blowing device on one side of the welding auxiliary station and the gas suction device on the other side of the welding auxiliary station, the distance between the blowing device and the gas inlet and the distance between the gas suction device and the gas dedusting port can be reduced, so that the effect of gas suction and dedusting can be improved, and welding dust can be prevented from affecting the welding quality.

In a third aspect, the present application also provides a laser welding device, including a laser welder and the laser welding auxiliary apparatus of any one of the above embodiments. The laser welder is arranged above the laser channel.

In the technical solution of the embodiment of the present application, since the laser welding device of this embodiment includes the laser welding copper nozzle of any of the above embodiments, it is possible to arrange the gas intake port of the laser welding copper nozzle and the gas exhaust port of the laser welding copper nozzle in the same straight line, and to form a laser channel for allowing laser to pass during the laser welding between the gas intake port and the gas exhaust port, so that when performing laser welding, the shielding gas can be independently controlled when it flows from the gas intake port to the gas exhaust port, the shielding gas forms a stable laminar layer in the welding area to improve the welding protection effect and avoid complex eddy or turbulence in the shielding gas, and the occurrence of false welding can thus be avoided.

### Description of Drawings

By reading the detailed description of the preferred embodiments below, various other advantages and benefits will become apparent to those of ordinary skill in the art. The drawings are for the purpose of illustrating the preferred embodiments only and are not to be considered a limitation to the present application. Moreover, in all of the drawings, the same components are indicated by the same reference signs. In the drawings:
Fig. 1 is a schematic structural diagram of a laser welding copper nozzle according to some embodiments of the present application;
Fig. 2 is a cross-sectional view of a laser welding copper nozzle according to some embodiments of the present application;
Fig. 3 is a top view of a laser welding copper nozzle according to some embodiments of the present application;
Fig. 4 is a schematic diagram of the positional relationship between a laser welder, a battery module, a laser welding copper nozzle, etc. during the welding of a laser welding device according to some embodiments of the present application; and
Fig. 5 is a schematic diagram of the positional relationship between the laser welder, the battery module, and the laser welding copper nozzle in Fig. 4.

The reference signs in Detailed Description are as follows:
1 - Gas intake port; 2 - Gas intake channel; 3 - Gas exhaust port; 4 - Gas extraction channel; 5 - Hollow cavity; 6 - Gas inlet; 7 - Gas dedusting port; D1 - Cross-sectional size of the gas intake port; D2 - Cross-sectional size of the gas exhaust port; 41 - Laser welder; 42 - Battery module; 43 - Laser welding copper nozzle; 44 - Laser beam.

### Detailed Description

Embodiments of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms " including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, mechanism, or characteristics described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein generally indicates an "or" relationship between the associated objects.

In the description of the embodiments of the present application, the term "plurality of" refers to at least two (including two); similarly, "plurality of groups" refers to at least two (including two) groups, and "plurality of pieces" refers to at least two (including two) pieces.

In the description of the embodiments of the present application, the orientation or location relationships indicated by the technical terms "center", "longitudinal", "transverse", "length ", "width", "thickness", "up", "down", "front", "back", "left", "right", "vertical", "horizontal", "top", "bottom", "inside", "outside", "clockwise", "counterclockwise", "axial", " radial", "circumferential" and the like are based on the orientation or location relationships shown in the drawings, and are only for convenience and simplification of the description of the embodiments of the present application, but do not indicate or imply that the apparatuses or elements referred to must have particular orientations, be constructed and operated in particular orientations, and therefore cannot be construed as a limitation of the embodiments of the present application.

In the description of the embodiments of the present application, unless otherwise expressly specified and limited, the technical terms "mounting," "connected," "connecting," "fixing", and the like shall be understood in a broad sense, which, for example, may be a fixed connection, or a detachable connection or an integral connection; may also be a mechanical connection, or an electrical connection; may be a direct connection, or an indirect connection through an intermediate medium, and may be a communication within two elements or an interactive relationship between two elements. For those of ordinary skill in the art, the specific meanings of the above terms in the embodiments of the present application can be understood according to specific situations.

At present, from the perspective of the development of the market situation, laser welding technology is more and more widely used. The inventors have noticed that in the prior art, a blowing mechanism is used to blow a shielding gas to a weld seam during welding to blow away dust from the weld seam (the shield gas is generally an inert gas) to achieve dedusting, but there are also the following problems in the prior art: the dedusting effect is not obvious during the laser welding, and it is likely to cause a turbulent flow of plasmas and fumes between the laser channels, resulting in laser energy attenuation, and eventually leading to the occurrence of false welding.

Based on the above considerations, in order to solve the above problems, the applicant has conducted in-depth research on a new combined dedusting device for laser welding of a power battery module, the combined dedusting device including a module positioning mechanism, a needle plate copper nozzle blowing mechanism and a dust suction mechanism. The needle plate copper nozzle blowing mechanism is installed in an elongated strip-shaped groove. This can effectively reduce the fume pollution during welding in the event of laser welding a busbar of the power battery module, thereby reducing the laser energy loss during the welding and improving the welding quality of the busbar of the power battery module. The existing needle plate copper nozzle blowing mechanism is of a rectangular structure, in which a shielding gas intake port is provided at the bottom of the blowing mechanism, and a fume removal port is provided at a middle upper portion of the blowing mechanism. However, this design will lead to a poor shielding gas protection effect and will form a complex gas flow atmosphere, the welding fumes and plasmas are likely to cause light being blocked by fumes and cause false welding. Alternatively, the existing needle plate copper nozzle blowing mechanism is of a circular structure, in which a shielding gas intake port is provided at the bottom of the blowing mechanism, and dedusting is carried out by introducing a pipe as a dedusting port from an upper portion of the copper nozzle. However, this design will also lead to a poor shielding gas protection effect and a complex gas flow atmosphere, the welding fumes and plasmas are likely to cause light being blocked by fumes and cause false welding.

On this basis, the applicant of the present application designs a laser welding copper nozzle, a laser welding auxiliary apparatus and a laser welding device. The laser welding copper nozzle can allow a shielding gas to form a stable laminar layer in a welding area during dedusting, to improve the welding protection effect and avoid complex eddy or turbulence in the shielding gas, so that the occurrence of false welding can be avoided.

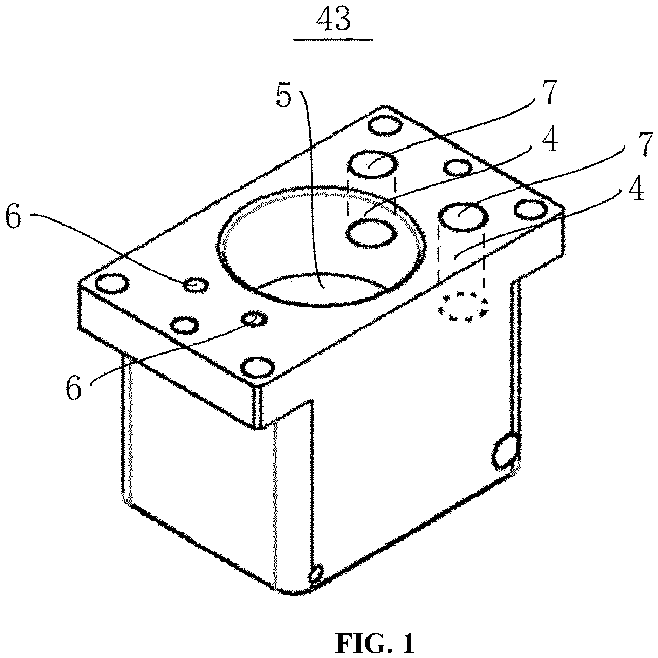

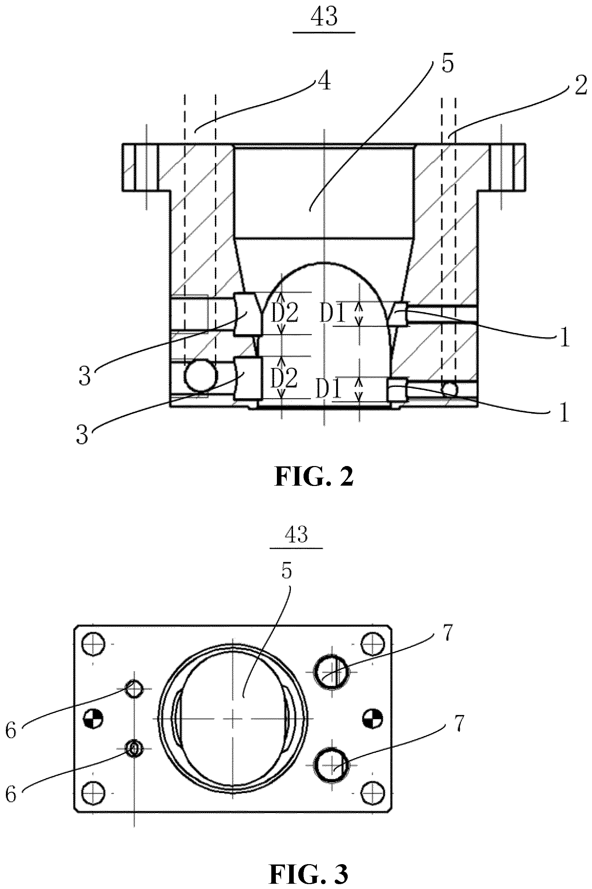

According to some embodiments of the present application, as shown in Figs. 1 to 3, Fig. 1 is a schematic structural diagram of a laser welding copper nozzle 43 according to some embodiments of the present application, Fig. 2 is a cross-sectional view of a laser welding copper nozzle 43 in one direction of the laser welding copper nozzle 43 according to some embodiments of the present application, and Fig. 3 is a top view of a laser welding copper nozzle 43 according to some embodiments of the present application. As shown in Figs. 1 to 3, the laser welding copper nozzle 43 includes: a gas intake port 1 configured to be in communication with the gas intake channel 2, so as to enable a blowing device to blow a gas to the gas intake port 1 through the gas intake channel 2 during laser welding; and a gas exhaust port 3 configured to be in communication with a gas extraction channel 4, so as to enable a gas suction device to extract the gas from the gas exhaust port 3 through the gas extraction channel 4 during the laser welding. An axis of the gas intake port 1 and an axis of the gas exhaust port 3 are in the same straight line, and a laser channel for allowing laser to pass during the laser welding is formed between the gas intake port 1 and the gas exhaust port 3. For example, when using a laser welding device to weld a member to be welded, it is possible to use the blowing device to blow the gas to the gas intake port 1 through the gas intake channel 2, and then use the gas suction device to extract the gas from the gas exhaust port 3 through the gas extraction channel 4. The gas blown by the blowing device is a shielding gas, which is generally an inert gas. In addition, since the axis of the gas intake port 1 and the axis of the gas exhaust port 3 are in the same straight line, when performing laser welding, the shielding gas can be independently controlled when it flows from the gas intake port 1 to the gas exhaust port 3, so that the shielding gas forms a stable laminar layer in a welding area to improve the welding protection effect and avoid complex eddy or turbulence in the shielding gas, and the occurrence of false welding can thus be avoided.

In the technical solution of the embodiment of the present application, the gas intake port 1 and the gas exhaust port 3 are in the same straight line, and a laser channel for allowing laser to pass during the laser welding is formed between the gas intake port 1 and the gas exhaust port 3, so that when performing laser welding, the shielding gas can be independently controlled when it flows from the gas intake port 1 to the gas exhaust port 3, the shielding gas forms a stable laminar layer in the welding area to improve the welding protection effect and avoid complex eddy or turbulence in the shielding gas, and the occurrence of false welding can thus be avoided.

In some embodiments of the present application, optionally, at least two gas intake ports 1 and at least two gas exhaust ports 3 are provided, and each of the gas intake ports 1 corresponds to one of the gas exhaust ports 3; each of the gas intake ports 1 is configured to be connected to a different gas intake channel 2; and each gas exhaust port 3 corresponding to one of the gas intake ports 1 is configured to be connected to a different gas extraction channel 4.

In the technical solution of the embodiment of the present application, with the provision of at least two gas intake ports 1 and at least two gas exhaust ports 3, it is possible to achieve multi-level cleaning of the laser channel through which the laser passes during the laser welding, and more effectively filter light-blocking particles such as fumes and plasmas in a gas flow in the laser channel, thereby reducing the energy attenuation of a welding laser beam, and further avoiding the occurrence of false welding.

In some embodiments of the present application, optionally, two gas intake ports 1 and two gas exhaust ports 3 are provided. For example, the two gas intake ports 1 are respectively a first gas intake port and a second gas intake port, and the two gas exhaust ports 3 are respectively a first gas exhaust port and a second gas exhaust port. Each gas intake port 1 is configured to be connected to a different gas intake channel 2. For example, there are also two gas intake channels 2, namely a first gas intake channel and a second gas intake channel. The first gas intake port is configured to be connected to the first gas intake channel, and the second gas intake port is configured to be connected to the second gas intake channel. Each gas exhaust port 3 corresponding to one of the gas intake ports 1 is configured to be connected to a different gas extraction channel 4. For example, there are also two gas extraction channels 4, namely a first gas extraction channel and a second gas extraction channel. The first gas exhaust port is configured to be connected to the first gas extraction channel, and the second gas exhaust port is configured to be connected to the second gas extraction channel. Moreover, an axis of the first gas intake port and an axis of the first gas exhaust port are in the same straight line, and an axis of the second gas intake port and an axis of the second gas exhaust port are in the same straight line.

In the technical solution of the embodiment of the present application, by setting both the number of gas intake ports 1 and the number of gas exhaust ports 3 to two, it is possible to achieve two-level cleaning of the laser channel through which the laser passes during the laser welding, and more effectively filter light-blocking particles such as fumes and plasmas in a gas flow in the laser channel, thereby reducing the energy attenuation of a welding laser beam, and further avoiding the occurrence of false welding.

According to some embodiments of the present application, optionally, the gas intake port 1 has a cross-sectional size D1 smaller than or equal to a cross-sectional size D2 of the gas exhaust port 3.

In the technical solution of the embodiment of the present application, thanks to the fact that the gas intake port 1 has a cross-sectional size D 1 smaller than or equal to a cross-sectional size D2 of the gas exhaust port 3, the shielding gas that enters through the gas intake channel 2 can be extracted through the gas extraction channel 4 as much as possible, so as to avoid the occurrence of gas turbulence in the laser channel due to excess gas not being extracted, thereby further avoiding the occurrence of false welding caused by the gas turbulence in the laser channel.

According to some embodiments of the present application, optionally, the laser welding copper nozzle 43 has a hollow cavity 5, and a hollow part of the cavity forms a laser channel for allowing the laser to pass during the laser welding.

In the technical solution of the embodiment of the present application, the laser welding copper nozzle 43 may be formed in one piece, and the laser channel is formed by the hollow part of the cavity of the laser welding copper nozzle 43, so that the cost of the laser welding copper nozzle 43 can be reduced, and the laser welding copper nozzle 43 is easy to install during the laser welding.

According to some embodiments of the present application, optionally, the gas intake port 1 and the gas exhaust port 3 are both arranged at an inner side wall of the cavity.

In the technical solution of the embodiment of the present application, by arranging both the gas intake port 1 and the gas exhaust port 3 on the inner side wall of the cavity, the structure of the laser welding copper nozzle 43 can be made simpler, and design and processing costs can be saved.

According to some embodiments of the present application, optionally, a surface of the laser welding copper nozzle 43 is provided with: a gas inlet 6, the gas inlet 6 being configured to be in communication with the gas intake port 1 through the gas intake channel 2; and a gas dedusting port 7, the gas dedusting port 7 being configured to be in communication with the gas exhaust port 3 through the gas extraction channel 4.

In the technical solution of the embodiment of the present application, under the action of external force (such as the blowing device), the gas flow can be directly guided from the gas inlet 6 to the gas intake port 1 through the gas intake channel 2, and then to the gas exhaust port 3 through the laser channel. Moreover, under the action of external force (such as the gas suction device), the gas flow can be directly guided from the gas exhaust port 3 to the gas dedusting port 7 through the gas extraction channel 4.

According to some embodiments of the present application, this embodiment also provides a laser welding auxiliary apparatus. The laser welding auxiliary apparatus of this embodiment includes: the laser welding copper nozzle 43 of any of the above embodiments; a blowing device configured to blow a gas to the gas intake port 1 through the gas intake channel 2; and a gas suction device configured to extract the gas from the gas exhaust port 3 through the gas extraction channel 4.

In the technical solution of the embodiment of the present application, since the laser welding auxiliary apparatus of this embodiment includes the laser welding copper nozzle 43 of any of the above embodiments, it is possible to arrange the gas intake port 1 of the laser welding copper nozzle 43 and the gas exhaust port 3 of the laser welding copper nozzle 43 in the same straight line, and to form a laser channel for allowing laser to pass during the laser welding between the gas intake port 1 and the gas exhaust port 3, so that when performing laser welding, the shielding gas can be independently controlled when it flows from the gas intake port 1 to the gas exhaust port 3, the shielding gas forms a stable laminar layer in the welding area to improve the welding protection effect and avoid complex eddy or turbulence in the shielding gas, and the occurrence of false welding can thus be avoided.

According to some embodiments of the present application, optionally, a surface of the laser welding copper nozzle 43 is provided with: a gas inlet 6, the gas inlet 6 being configured to be in communication with the gas intake port 1 through the gas intake channel 2; a gas dedusting port 7, the gas dedusting port 7 being configured to be in communication with the gas exhaust port 3 through the gas extraction channel 4; the blowing device specifically configured to blow the gas to the gas intake port 1 through the gas inlet 6 and the gas intake channel 2; and the gas suction device specifically configured to extract the gas from the gas exhaust port 3 through the gas extraction channel 4 and the gas dedusting port 7.

In the technical solution of the embodiment of the present application, under the action of the blowing device, the gas flow can be directly guided from the gas inlet 6 to the gas intake port 1 through the gas intake channel 2, and then to the gas exhaust port 3 through the laser channel. Moreover, under the action of the gas suction device, the gas flow can be directly guided from the gas exhaust port 3 to the gas dedusting port 7 through the gas extraction channel 4.

According to some embodiments of the present application, optionally, the blowing device is located on one side of the welding auxiliary station, and the gas suction device is located on the other side of the welding auxiliary station.

In the technical solution of the embodiment of the present application, by locating the blowing device on one side of the welding auxiliary station and the gas suction device on the other side of the welding auxiliary station, the distance between the blowing device and the gas inlet 6 and the distance between the gas suction device and the gas dedusting port 7 can be reduced, so that the effect of gas suction and dedusting can be improved, and welding dust can be prevented from affecting the welding quality.

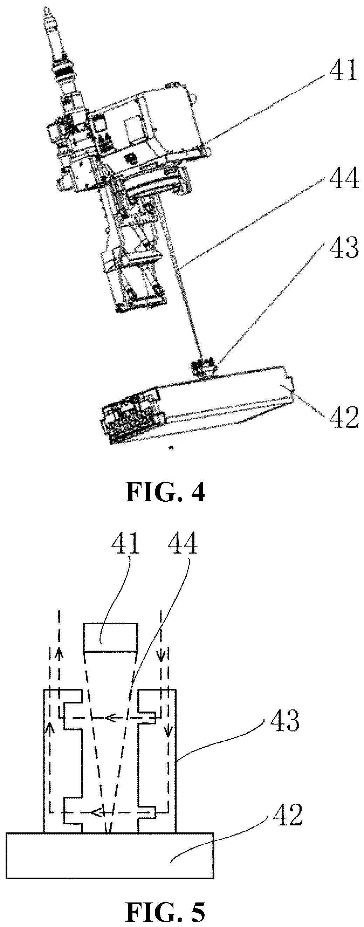

According to some embodiments of the present application, as shown in Figs. 4 and 5, Fig. 4 is a schematic diagram of the positional relationship between a laser welder 41, a battery module 42, a laser welding copper nozzle 43, etc. during the welding of a laser welding device; and Fig. 5 is a schematic diagram of the positional relationship between the laser welder 41, the battery module 42, and the laser welding copper nozzle 43 in Fig. 4. The laser welding device includes: a laser welder 41 and the laser welding auxiliary apparatus of any one of the above embodiments. The laser welder 41 is arranged above the laser channel.

The laser welding device of this embodiment may be used to weld any device that needs to be welded. The use of the laser welding device of this embodiment to weld a battery module is illustrated below as an example. The battery module 42 is placed on a welding station. The laser welding copper nozzle 43 is placed above the battery module 42, and a laser channel is formed between the gas intake port 1 and the gas exhaust port 3 of the laser welding copper nozzle 43. The laser channel is configured to allow a laser beam 44 to pass during laser welding. The laser welding copper nozzle 43 and the battery module 42 are pressed together to make the position of the laser welding copper nozzle 43 and the battery module 42 relatively fixed. The blowing device is activated to blow a gas to the gas intake port 1 through the gas intake channel 2. The gas suction device is activated to extract the gas from the gas exhaust port 3 through the gas extraction channel 4. In this case, the direction of the gas flow is indicated by the dotted arrow in Fig. 5. The laser welder 41 is activated to weld the battery module 42. After the welding is completed, the laser welder 41 is deactivated first, and the blowing device and the gas suction device are then deactivated.

In the technical solution of the embodiment of the present application, since the laser welding device of this embodiment includes the laser welding copper nozzle of any of the above embodiments, it is possible to arrange the gas intake port of the laser welding copper nozzle and the gas exhaust port of the laser welding copper nozzle in the same straight line, and to form a laser channel for allowing laser to pass during the laser welding between the gas intake port and the gas exhaust port, so that when performing laser welding, the shielding gas can be independently controlled when it flows from the gas intake port to the gas exhaust port, the shielding gas forms a stable laminar layer in the welding area to improve the welding protection effect and avoid complex eddy or turbulence in the shielding gas, and the occurrence of false welding can thus be avoided.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A laser welding copper nozzle, comprising:
a gas intake port configured to be in communication with a gas intake channel, so as to enable a blowing device to blow a gas to the gas intake port through the gas intake channel during laser welding; and
a gas exhaust port configured to be in communication with a gas extraction channel, so as to enable a gas suction device to extract the gas from the gas exhaust port through the gas extraction channel during the laser welding, wherein
an axis of the gas intake port and an axis of the gas exhaust port are in the same straight line, and a laser channel for allowing laser to pass during the laser welding is formed between the gas intake port and the gas exhaust port.

2. The laser welding copper nozzle according to claim 1, wherein at least two gas intake ports and at least two gas exhaust ports are provided, and each of the gas intake ports corresponds to one of the gas exhaust ports;
each of the gas intake ports is configured to be connected to a different gas intake channel; and
each gas exhaust port corresponding to one of the gas intake ports is configured to be connected to a different gas extraction channel.

3. The laser welding copper nozzle according to claim 2, wherein two gas intake ports and two gas exhaust ports are provided.

4. The laser welding copper nozzle according to any one of claims 1 to 3, wherein the gas intake port has a cross-sectional size smaller than or equal to that of the gas exhaust port.

5. The laser welding copper nozzle according to any one of claims 1 to 3, wherein the laser welding copper nozzle has a hollow cavity, and a hollow part of the cavity forms the laser channel for allowing the laser to pass during the laser welding.

6. The laser welding copper nozzle according to claim 5, wherein the gas intake port and the gas exhaust port are both arranged at an inner side wall of the cavity.

7. The laser welding copper nozzle according to claim 5, wherein a surface of the laser welding copper nozzle is provided with:
a gas inlet configured to be in communication with the gas intake port through the gas intake channel; and
a gas dedusting port configured to be in communication with the gas exhaust port through the gas extraction channel.

8. A laser welding auxiliary apparatus, comprising:
the laser welding copper nozzle according to any one of claims 1 to 6;
a blowing device configured to blow a gas to the gas intake port through the gas intake channel; and
a gas suction device configured to extract the gas from the gas exhaust port through the gas extraction channel.

9. The laser welding auxiliary apparatus according to claim 8, wherein a surface of the laser welding copper nozzle is provided with:
a gas inlet configured to be in communication with the gas intake port through the gas intake channel;
a gas dedusting port configured to be in communication with the gas exhaust port through the gas extraction channel;
the blowing device specifically configured to blow the gas to the gas intake port through the gas inlet and the gas intake channel; and
the gas suction device specifically configured to extract the gas from the gas exhaust port through the gas extraction channel and the gas dedusting port.

10. The laser welding auxiliary apparatus according to claim 8, wherein the blowing device is located on one side of a welding auxiliary station, and the gas suction device is located on the other side of the welding auxiliary station.

11. A laser welding device, comprising: a laser welder and the laser welding auxiliary apparatus according to any one of claims 8-10, wherein
the laser welder is arranged above the laser channel.
